# EUROPEAN PATENT APPLICATION

(11) **EP 3 264 290 A1**
(43) Date of publication of application: **03.01.2018**
(21) Application number: 16202281.8
(22) Date of filing: 05.12.2016
(51) Int. Cl.: G06F 17/30

(54) **METHOD AND APPARATUS FOR RECOMMENDATION OF AN INTERFACE THEME**

(30) Priority: 29.06.2016 CN 201610499499
(71) Applicant: Beijing Xiaomi Mobile Software Co., Ltd., Beijing 100085 (CN)
(72) Inventor: FU, Haojing, Beijing, Beijing 100085 (CN); DING, Meng, Beijing, Beijing 100085 (CN); ZHOU, Lei, Beijing, Beijing 100085 (CN)
(74) Representative: Grunert, Marcus

(57) **Abstract**

A method, apparatus, terminal and server for recommendation of an interface theme are provided in the disclosure. An exemplary embodiment of the method includes: obtaining (201) a target image which includes a figure of a target person; obtaining (202) characteristic information of the target person based on the target image; obtaining (203) a selection list of recommended themes, wherein the recommended themes are interface themes that match the characteristic information of the target person; and outputting (204) the selection list of recommended themes. In the implementation, there is no need for a user to search for the preferred interface theme manually, which saves time and increases use efficiency of the terminal.

## Description

### FIELD

The present disclosure generally relates to computer network technology, and more particularly to a method, apparatus, terminal and server for recommendation of an interface theme.

### BACKGROUND

With the development of electronic technologies, a smart terminal has become a necessary tool in people's life and work, and has facilitated people's life significantly. Meanwhile, requirements on aesthetics of the terminal are increasing. There are some interface themes which can beautify an interface of the terminal and personalize the terminal. The interface themes can beautify wallpaper, cursor, prompt sound and icon of the interface of the terminal and unify them to the same style. In related technologies, a user can only search for and change a preferred interface theme manually, which results in consumed time and reduced use efficiency of the terminal.

### SUMMARY

In view of the related arts, a method, apparatus, terminal and server for recommendation of an interface theme are provided in the disclosure of the present application.

According to a first aspect of the present invention, a method for recommendation of an interface theme is provided, including: obtaining a target image which includes a figure of a target person; obtaining characteristic information of the target person based on the target image; obtaining a selection list of recommended themes, wherein the recommended themes are interface themes that match the characteristic information of the target person; and outputting the selection list of recommended themes.

Optionally, the obtaining a target image includes: providing one or more image input interfaces for a user to input an image via one of the image input interfaces, wherein each of the image input interfaces corresponds to an input mode; and obtaining the image inputted by the user as the target image.

Optionally, the one or more image input interfaces include a first image input interface corresponding to a first input mode, wherein the first input mode is a mode to input an image currently being taken.

Optionally, the one or more image input interfaces include a second image input interface corresponding to a second input mode, wherein the second input mode is a mode to input an image selected from a local album.

Optionally, the obtaining the image inputted by the user as the target image includes: obtaining, when the user selects the second image input interface to input an image, images each including a figure of a person as candidate images; outputting a selection interface for the candidate images; and obtaining an image, which the user selects from the candidate images via the selection interface, as the target image.

Optionally, the obtaining characteristic information of the target person based on the target image includes: recognizing and analyzing the target image using a pre-trained model to extract the characteristic information of the target person from the target image.

Optionally, the characteristic information of the target person includes one or more of: age range information of the target person; gender information of the target person; clothing information of the target person; hair style information of the target person; and facial expression information of the target person.

Optionally, the obtaining a selection list of recommended themes includes: transmitting to a server a request for obtaining recommended themes which includes the characteristic information of the target person, to instruct the server to generate the selection list of recommended themes based on the characteristic information of the target person; and receiving the selection list of recommended themes transmitted by the server.

According to a second aspect of the present disclosure, a method for recommendation of an interface theme is provided, including: receiving a request for obtaining recommended themes transmitted by a terminal, wherein the request for obtaining recommended themes includes characteristic information of a target person, and wherein the characteristic information of the target person is obtained based on a target image including a figure of the target person; generating a selection list of recommended themes based on the characteristic information of the target person, wherein the recommended themes are interface themes that match the characteristic information of the target person; and transmitting the selection list of recommended themes to the terminal.

Optionally, the generating a selection list of recommended themes based on the characteristic information of the target person includes: searching pre-stored interface themes for a target theme, wherein the target theme has a preset label that matches the characteristic information of the target person; and generating the selection list of recommended themes based on the target theme.

Optionally, the generating the selection list of recommended themes based on the target theme includes: obtaining download times corresponding to the target theme; and selecting from the target themes a predetermined number of top ones in descending order of download times, as the recommended themes, to generate the selection list of recommended themes.

Optionally, the characteristic information of the target person includes one or more of: age range information of the target person; gender information of the target person; clothing information of the target person; hair style information of the target person; and facial expression information of the target person.

According to a third aspect of the present invention, an apparatus for recommendation of an interface theme is provided, including: a first obtaining module configured to obtain a target image which includes a figure of a target person; a second obtaining module configured to obtain characteristic information of the target person based on the target image; a third obtaining module configured to obtain a selection list of recommended themes, wherein the recommended themes are interface themes that match the characteristic information of the target person; and an output module configured to output the selection list of recommended themes.

Optionally, the first obtaining module includes: a providing sub-module configured to provide one or more image input interfaces for a user to input an image via one of the image input interfaces, wherein each of the image input interfaces corresponds to an input mode; and an obtaining sub-module configured to obtain the image inputted by the user as the target image.

Optionally, the one or more image input interfaces include a first image input interface corresponding to a first input mode, wherein the first input mode is a mode to input an image currently being taken.

Optionally, the one or more image input interfaces include a second image input interface corresponding to a second input mode, wherein the second input mode is a mode to input an image selected from a local album.

Optionally, the obtaining sub-module includes: a candidate image obtaining sub-module configured to obtain, when the user selects the second image input interface to input an image, images each including a figure of a person as candidate images; an outputting sub-module configured to output a selection interface for the candidate images; and a target image obtaining sub-module configured to obtain an image, which the user selects from the candidate images via the selection interface, as the target image.

Optionally, the second obtaining module includes: a recognition sub-module configured to recognize and analyze the target image using a pre-trained model to extract the characteristic information of the target person from the target image.

Optionally, the characteristic information of the target person includes one or more of: age range information of the target person; gender information of the target person; clothing information of the target person; hair style information of the target person; and facial expression information of the target person.

Optionally, the third obtaining module includes: a transmission sub-module configured to transmit to a server a request for obtaining recommended themes which includes the characteristic information of the target person, to instruct the server to generate the selection list of recommended themes based on the characteristic information of the target person; and a reception sub-module configured to receive the selection list of recommended themes transmitted by the server.

According to a fourth aspect of the present disclosure, an apparatus for recommendation of an interface theme is provided, including: a reception module configured to receive a request for obtaining recommended themes transmitted by a terminal, wherein the request for obtaining recommended themes includes characteristic information of a target person, and wherein the characteristic information of the target person is obtained based on a target image including a figure of the target person; a generation module configured to generate a selection list of recommended themes based on the characteristic information of the target person, wherein the recommended themes are interface themes that match the characteristic information of the target person; and a transmission module configured to transmit the selection list of recommended themes to the terminal.

Optionally, the generation module includes: a searching sub-module configured to search pre-stored interface themes for a target theme, wherein the target theme has a preset label that matches the characteristic information of the target person; and a generation sub-module configured to generate the selection list of recommended themes based on the target theme.

Optionally, the generation sub-module includes: an obtaining sub-module configured to obtain download times corresponding to the target theme; and a selection sub-module configured to select from the target themes a predetermined number of top ones in descending order of download times, as the recommended themes, to generate the selection list of recommended themes.

Optionally, the characteristic information of the target person includes one or more of: age range information of the target person; gender information of the target person; clothing information of the target person; hair style information of the target person; and facial expression information of the target person.

According to a fifth aspect of the present disclosure, a terminal is provided, including: a processor; a memory to store processor-executable instructions; wherein the processor is configured to: obtain a target image which includes a figure of a target person; obtain characteristic information of the target person based on the target image; obtain a selection list of recommended themes, wherein the recommended themes are interface themes that match the characteristic information of the target person; and output the selection list of recommended themes.

According to a sixth aspect of the present disclosure, a server is provided, including: a processor; a memory to store processor-executable instructions; wherein the processor is configured to: receive a request for obtaining recommended themes transmitted by a terminal, wherein the request for obtaining recommended themes includes characteristic information of a target person, and wherein the characteristic information of the target person is obtained based on a target image including a figure of the target person; generate a selection list of recommended themes based on the characteristic information of the target person, wherein the recommended themes are interface themes that match the characteristic information of the target person; and transmit the selection list of recommended themes to the terminal.

The technical solutions of the present disclosure may achieve the following beneficial effects.

In the method for recommendation of an interface theme above, a target image is obtained, characteristic information of a target person is obtained based on the target image, and a selection list of recommended themes which match the characteristic information of the target person is obtained and outputted for a user to select a preferred interface theme via the selection list. There is no need for the user to search for the preferred interface theme manually, which saves time and increases use efficiency of the terminal.

In the method for recommendation of an interface theme above, an image inputted by a user is obtained as a target image by providing one or more image input interfaces, the target image is recognized and analyzed using a pre-trained model, characteristic information of a target person is extracted from the target image, a request for obtaining recommended themes which includes the characteristic information of the target person is transmitted to a server, a selection list of recommended themes transmitted by the server is received, and the selection list of recommended themes is outputted for the user to select a preferred interface theme via the selection list. There is no need for the user to search for the preferred interface theme manually, which saves time and increases use efficiency of the terminal.

In the method for recommendation of an interface theme above, a selection list of recommended themes, after a request for obtaining recommended themes which is transmitted by a terminal and includes characteristic information of a target person is received, is generated based on the characteristic information of the target person, and the selection list of recommended themes is transmitted to the terminal for presenting to a user, so that the user may select a preferred interface theme via the selection list. There is no need for the user to search for the preferred interface theme manually, which saves time and increases use efficiency of the terminal.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an exemplary system architecture applying an exemplary embodiment of the disclosure.
Fig. 2 is a flow chart showing a method for recommendation of an interface theme according to an exemplary embodiment of the disclosure.
Fig. 3 is a flow chart showing another method for recommendation of an interface theme according to an exemplary embodiment of the disclosure.
Fig. 4 is a schematic diagram showing an application scenario for the method for recommendation of an interface theme according to the exemplary embodiment of the disclosure.
Fig. 5 is a schematic diagram showing another application scenario for the method for recommendation of an interface theme according to the exemplary embodiment of the disclosure.
Fig. 6 is a flow chart showing another method for recommendation of an interface theme according to an exemplary embodiment of the disclosure.
Fig. 7 is a block diagram showing an apparatus for recommendation of an interface theme according to an exemplary embodiment of the disclosure.
Fig. 8 is a block diagram showing another apparatus for recommendation of an interface theme according to an exemplary embodiment of the disclosure.
Fig. 9 is a block diagram showing another apparatus for recommendation of an interface theme according to an exemplary embodiment of the disclosure.
Fig. 10 is a block diagram showing another apparatus for recommendation of an interface theme according to an exemplary embodiment of the disclosure.
Fig. 11 is a block diagram showing another apparatus for recommendation of an interface theme according to an exemplary embodiment of the disclosure.
Fig. 12 is a block diagram showing another apparatus for recommendation of an interface theme according to an exemplary embodiment of the disclosure.
Fig. 13 is a block diagram showing another apparatus for recommendation of an interface theme according to an exemplary embodiment of the disclosure.
Fig. 14 is a block diagram showing another apparatus for recommendation of an interface theme according to an exemplary embodiment of the disclosure.
Fig. 15 is a structure diagram showing an apparatus for recommendation of an interface theme according to an exemplary embodiment of the disclosure.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

Terms used in the disclosure are only for description of particular embodiments, rather than intend to limit the disclosure. Singular form "a", "said" and "the" used in the disclosure and the appended claims also intend to include plural form, unless otherwise described distinctly in context. It is to be understood that the term "and/or" used in the disclosure refers to and includes any or all of possible combinations of one or more associated items listed.

It is to be understood that, although various information may be described using terms "first", "second", "third" and the like, the information is not limited to these terms. These terms are only used to distinguish the same kind of information from each other. For example, first information may be referred to as second information, and similarly, second information may be referred to as first information, without departing from the scope of the disclosure. For example, "if" user herein, depending on the context, may be explained as "when" or "in response to a determination".

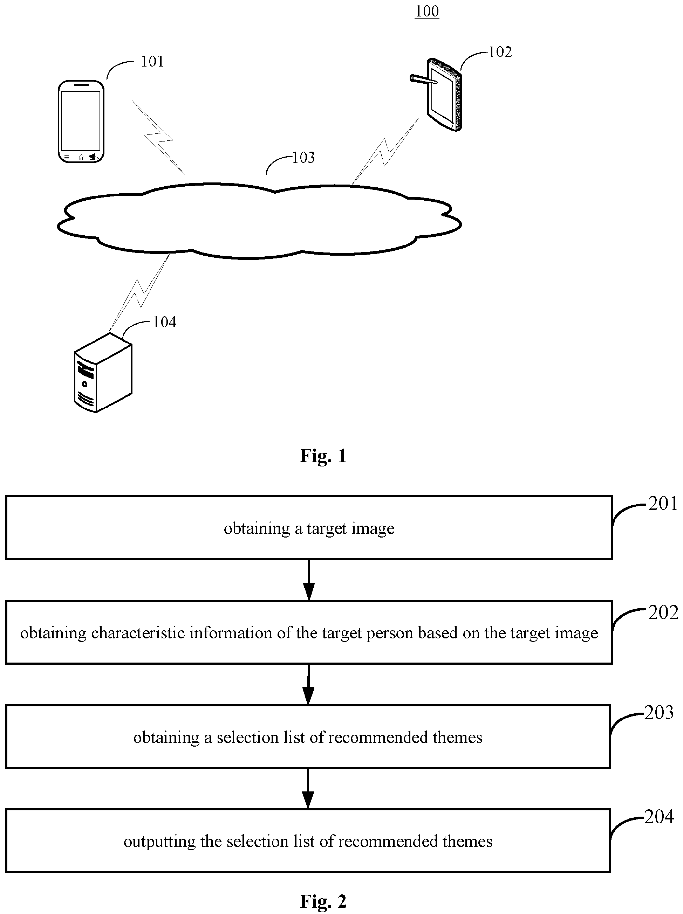

Fig. 1 is a schematic diagram showing an exemplary system architecture applying an embodiment of the disclosure.

As shown in Fig. 1, a system architecture 100 may include terminals 101 and 102, a network 103, and a server 104. The network 103 provides communication link medium between the terminals 101 and 102 and the server 104. The network 103 may include various types of connections, such as a wired, wireless communicaiton link or an optical cable.

The terminals 101 and 102 may interact via the network 103 and the server 104, to receive and transmit a request or information and the like. The terminals 101 and 102 may be various electronic devices, including but not limited to, a mobile terminal device (e.g., a smart phone), a smart wearable device, a tablet, a personal digital assistant, and the like.

The server 104 may be a server that provides a recommendation service of an interface theme and other various services. The server 104 may store, analyze and otherwise process received data, transmit information to a terminal, and so on. The server 104 may provide a service in response to a service request from the teminals 101 and 102. For example, the server 104 may receive a request for obtaining recommended themes transmitted from the terminals 101, 102, generate a selection list of recommended themes in response to the request for obtaining recommended themes, and transmit the selection list of recommended themes to the terminals 101, 102. It can be understood that a server may provide one or more types of services, and the same type of service may be provided by a plurality of servers.

It is to be understood that the number of terminal, network, and server in Fig. 1 is only for illustration, and there may be any number of terminal, network, and server as required.

The disclosure will be described in detail in reference to specific embodiments.

Fig. 2 is a flow chart showing a method for recommendation of an interface theme according to an exemplary embodiment of the disclosure. The method may be applicable to a terminal. In the embodiment, a terminal with a display screen is illustrated for ease of understanding. Those skilled in the art may understand that the terminal may include, but not limited to, a mobile terminal device (e.g., a smart phone), a smart wearable device, a tablet, a personal digital assistant, and the like. The method may include the following steps.

In step 201, a target image is obtained.

In the embodiment, the target image may include a figure of a target person. For example, the target image may include a figure of a user of the terminal, and the like. In an implementation of the embodiment, an image, which is taken and includes the figure of the target person, may be used as the target image. In another implementation of the embodiment, an image, which is selected from locally pre-stored images and includes the figure of the target person, may be used as the target image. It is to be understood that the disclosure is not limited in this aspect.

In step 202, characteristic information of the target person is obtained based on the target image.

In the embodiment, the characteristic information of the target person may be obtained based on the figure of the target person in the target image, since the target image includes the figure of the target person. The characteristic information of the target person may include one or more of age range information of the target person, gender information of the target person, clothing information of the target person, hair style information of the target person, facial expression information of the target person, and the like. It is to be understood that the characteristic information of the target person may also include any other characteristic information that may be obtained based on the figure of the target person. Content and form of the characteristic information of the target person is not limited in the disclosure.

In step 203, a selection list of recommended themes is obtained.

In the embodiment, the recommended themes are interface themes that match the characteristic information of the target person. In specifically, all the interface themes may be preset with theme labels. Each of the theme labels may be a label that is associated with the characteristic information of the person and indicative of characteristic which the figure, which uses the interface theme having the theme label, is likely to have. For example, if an interface theme A is in HelloKitty style, the figure using the interface theme A is likely to have the following characteristic: female, 3 to 20 years old, wearing pink casual clothes, and having smiling and cute facial expression. Thus, the following theme labels may be set for the interface theme A: a young girl, pink style, casual clothes, smile, cute, and the like.

Or, if an interface theme B is in One Piece style, the figure using the interface theme B is likely to have the following characteristic: male, 3 to 20 years old, wearing blue casual clothes, and having smiling, naughty and sunshine facial expression. Thus, the following theme labels may be set for the interface theme A: a young boy, blue style, casual clothes, smile, sunshine, and the like.

In an implementation, information about association between an interface theme identification and a corresponding theme label, and information about matching relationship between a theme label and characteristic information of a figure, may be pre-stored locally. After the characteristic information of the target person is obtained, a theme label, which matches the characteristic information of the target person, may be searched out from locally pre-stored data, as a target theme label. An interface theme having the target theme label may be determined as a target interface theme, based on the information about association between an interface theme identification and a corresponding theme label. Partial or all target interface themes may be selected as recommended themes, and the selection list of recommended themes may be generated.

In another implementation, information about association between an interface theme identification and a corresponding theme label, and information about matching relationship between a theme label and characteristic information of a figure, may be pre-stored in a server. After the characteristic information of the target person is obtained, the characteristic information of the target person may be transmitted to the server. The server may seach the stored data for a theme label, which matches the characteristic information of the target person, as a target theme label. An interface theme having the target theme label may be determined as a target interface theme, based on the information about association between an interface theme identification and a corresponding theme label. Partial or all target interface themes may be selected as recommended themes. The selection list of recommended themes may be generated and returned.

In step 204, the selection list of recommended themes is outputted.

In the embodiment, the selection list of recommended themes is outputted after the selection list of recommended themes is obtained, so that the user may select a preferred interface theme via the selection list and switch the currently used interface theme into the interface theme selected by the user.

In the method for recommendation of an interface theme above, a target image is obtained, characteristic information of a target person is obtained based on the target image, and a selection list of recommended themes which match the characteristic information of the target person is obtained and outputted for a user to select a preferred interface theme via the selection list. There is no need for the user to search for the preferred interface theme manually, which saves time and increases use efficiency of the terminal.

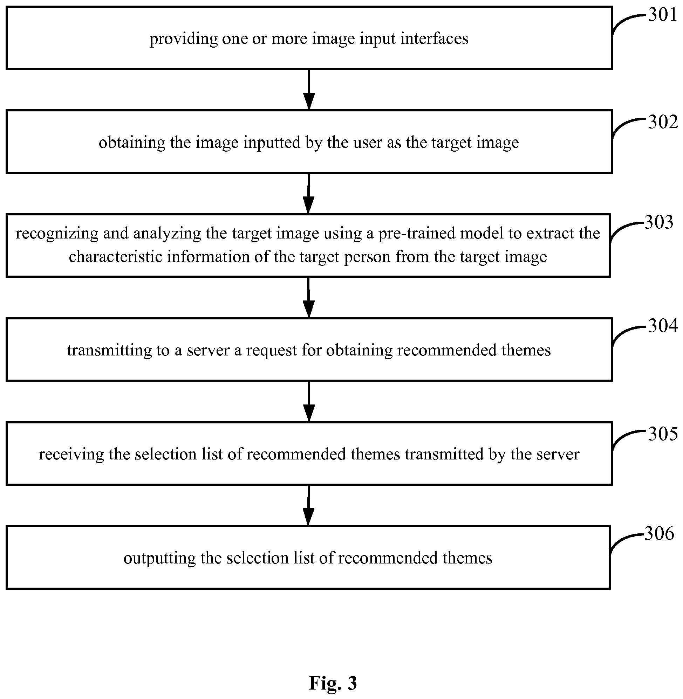

Fig. 3 is a flow chart showing another method for recommendation of an interface theme according to an exemplary embodiment of the disclosure. The embodiment describes the procedure of obtaining a target image, obtaining characteristic information of the target person based on the target image, and obtaining a selection list of recommended themes in detail. The method may be applicable to a terminal and include the following steps.

In step 301, one or more image input interfaces are provided.

In the embodiment, firstly, one or more image input interfaces may be provided for a user to input an image via one of the image input interfaces, wherein each of the image input interfaces corresponds to an input mode. The one or more image input interfaces may include a first image input interface corresponding to a first input mode, wherein the first input mode is a mode to input an image currently being taken. Alternatively, the one or more image input interfaces may include a second image input interface corresponding to a second input mode, wherein the second input mode is a mode to input an image selected from a local album. Also, the one or more image input interfaces may include both the first image input interface and the second image input interface. It is to be understood that the disclosure is not limited in this aspect.

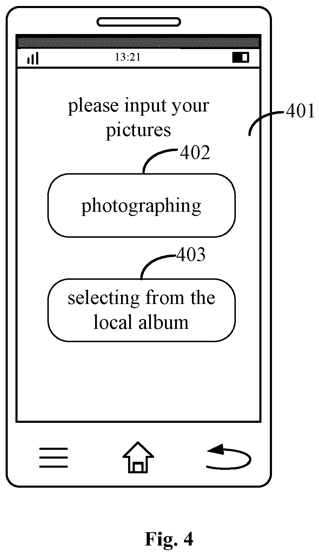

As shown in Fig. 4, an interface 401 is an image input interface and it provides two image input interfaces, i.e., an interface 402 and an interface 403. The user may input an image (the target image) including the figure of the target person via the interface 402 and the interface 403. For example, when the user triggers the interface 402, camera funtion of the terminal may be launched and an interface for photographing may be outputted. The user may directly take a picture including the figure of the target person via the interface for photographing, as the target image. When the user triggers the interface 403, an interface for browsing local album list may be outputted. The user may select a picture including the figure of the target person via the interface for browsing local album list, as the target image.

In step 302, the image inputted by the user is obtained as the target image.

In the embodiment, if the user selects to input the image through photographing, the image being taken by the user is obtained directly as the target image. If the user selects to input the image by selecting an image from the local album, in another implementation, all the images in the local album may serve as candicate images and a selection interface for the candidate images is outputted for the user to select. In another implementation, images, each of which includes a figure of a person, in the local album may serve as candicate images and a selection interface for the candidate images is outputted for the user to select.

In particularly, when the user selects the second image input interface to input an image, images each including a figure of a person may be obtained from the local album to serve as candidate images. Then, a selection interface for the candidate images is outputted, and an image, which the user selects from the candidate images via the selection interface, is obtained to serve as the target image.

Image recognition technology may be used to recognize all of the pictures in the local album, to search for the images each including a figure of a person. Image recognition technology may also be used to recognize pictures in a specified catalog (e.g., self-photographing catalog, figure catalog, and the like) of the local album, to search for the images each including a figure of a person. It is to be understood that other methods may also be used to search for candidate images in the local album. The disclosure is not limited in the aspect of searching for candidate images.

In step 303, the target image is recognized and analyzed using a pre-trained model to extract the characteristic information of the target person from the target image.

In the embodiment, the target image may be recognized and analyzed using a pre-trained model to extract the characteristic information of the target person from the target image. For example, the following information may be recognized: a rough age range of the target person; gender of the target person; colour, design, style, decoration of clothes of the target person; hair style, hair colour of the target person, etc.; and facial expression, posture, of the target person, etc.

In step 304, a request for obtaining recommended themes is transmitted to a server.

In the embodiment, the request for obtaining recommended themes may be transmitted to the server. The request for obtaining recommended themes includes the characteristic information of the target person. The server may, after receiving the request for obtaining recommended themes, generate the selection list of recommended themes based on the characteristic information of the target person under the instruction of the request for obtaining recommended themes, and return the generated selection list of recommended themes.

In step 305, the selection list of recommended themes transmitted by the server is received.

In step 306, the selection list of recommended themes is outputted.

The same steps in the embodiment of Fig. 3 as those in the embodiment of Fig.2 will not be described, and the embodiment of Fig.2 may be referred to for related content.

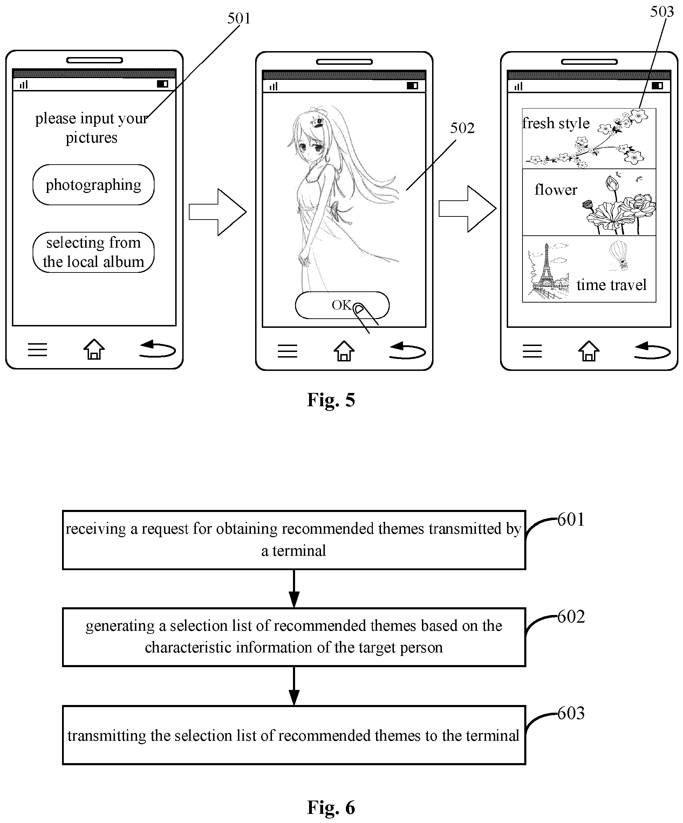

Fig. 5 is a schematic diagram showing an application scenario for the method for recommendation of an interface theme according to the exemplary embodiment. In the scenario, the terminal outputs to the user an image input interface 501, which provides two image input interfaces, one of which corresponds to a mode to input an image through photographing and the other one of which corresponds to a mode to input an image through selecting the image in the local album. The user may input the target image through one of the image input interfaces. Before determining to input the target image, the terminal may output to the user an interface for browsing an image to be inputted 502, through which the user may browse the image to be inputted to determine whether the image to be inputted is correct. When it is determined that the image to be inputted is correct, an "OK" icon on the interface may be pressed to input the image as the target image. The terminal, in response to the input of the target image, may obtain the selection list of recommended themes based on the target image, and output an interface for the selection list of recommended themes 503, via which the user may select a preferred interface theme and switch the currently used interface theme into the selected interface theme.

The embodiment is not limited to the above application scenario and may also be applicable to other scenarios. In the method for recommendation of an interface theme in the above embodiment, an image inputted by a user is obtained as a target image by providing one or more image input interfaces, the target image is recognized and analyzed using a pre-trained model, characteristic information of a target person is extracted from the target image, a request for obtaining recommended themes which includes the characteristic information of the target person is transmitted to a server, a selection list of recommended themes transmitted by the server is received, and the selection list of recommended themes is outputted for the user to select a preferred interface theme via the selection list. There is no need for the user to search for the preferred interface theme manually, which saves time and increases use efficiency of the terminal.

Fig. 6 is a flow chart showing another method for recommendation of an interface theme according to an exemplary embodiment of the disclosure. The method may be applicable to a server and include the following steps.

In step 601, a request for obtaining recommended themes transmitted by a terminal is received.

In the embodiment, the request for obtaining recommended themes may include characteristic information of a target person, and the characteristic information of the target person is obtained based on a target image including a figure of the target person. In particularly, the terminal may, after obtaining the target image including the figure of the target person, obtain the characteristic information of the target person based on the target image. The terminal then may generate the request for obtaining recommended themes which includes the characteristic information of the target person to instruct a server to generate a selection list of recommended themes.

In the embodiment, the characteristic information of the target person may include one or more of age range information of the target person, gender information of the target person, clothing information of the target person, hair style information of the target person, facial expression information of the target person, and the like.

In step 602, the selection list of recommended themes is generated based on the characteristic information of the target person.

In the embodiment, the recommended themes are interface themes that match the characteristic information of the target person. In particularly, some interface themes may be pre-stored in a server, along with information about association between an interface theme identification and a corresponding theme label and information about matching relationship between a theme label and characteristic information of a figure. After the characteristic information of the target person is obtained from the request for obtaining recommended themes, the stored data may be searched for a theme label, which matches the characteristic information of the target person, as a target theme label. An interface theme having the target theme label may be determined as a target theme, based on the information about association between an interface theme identification and a corresponding theme label. The selection list of recommended themes may be generated based on the target theme.

In the embodiment, partial or all target themes may be selected as recommended themes. For example, download times corresponding to each of the target themes may be obtained. A predetermined number of top target themes in descending order of download times are selected from the target themes as the recommended themes, to generate the selection list of recommended themes. It is to be understood that there are other methods to generate the selection list of recommended themes, and the disclosure is not limited in this aspect.

In step 603, the selection list of recommended themes is transmitted to the terminal.

In the method for recommendation of an interface theme mentioned in the above embodiment, a selection list of recommended themes, after a request for obtaining recommended themes which is transmitted by a terminal and includes characteristic information of a target person is received, is generated based on the characteristic information of the target person, and the selection list of recommended themes is transmitted to the terminal for presenting to a user, so that the user may select a preferred interface theme via the selection list. There is no need for the user to search for the preferred interface theme manually, which saves time and increases use efficiency of the terminal.

It is to be understood that the operations of the disclosure are described in a specified sequence in the accompanying drawings, however, it is not required and implied that the operations should be performed in the specified sequence or that all the operations shown should be performed to achieve the desired result. Instead, the sequence of the steps illustrated in the flow chart may be altered. Alternatively or optionally, some steps may be omitted, combined as one step, and/or divided into several steps.

An embodiment of an apparatus for recommendation of an interface theme and an applicable terminal are provided in the disclosure, which corresponds to the method for recommendation of an interface theme above mentioned.

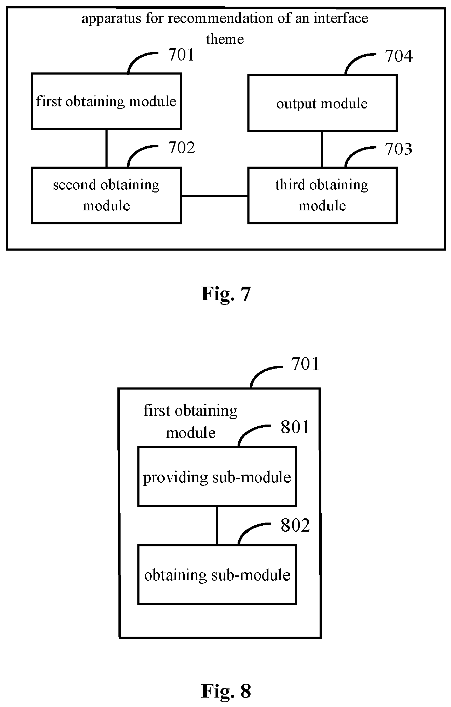

Fig. 7 is a block diagram showing an apparatus for recommendation of an interface theme according to an exemplary embodiment of the disclosure. The apparatus includes a first obtaining module 701, a second obtaining module 702, a third obtaining module 703, and an output module 704.

The first obtaining module 701 is configured to obtain a target image which includes a figure of a target person.

The second obtaining module 702 is configured to obtain characteristic information of the target person based on the target image.

The third obtaining module 703 is configured to obtain a selection list of recommended themes, wherein the recommended themes are interface themes that match the characteristic information of the target person; and

The output module 704 is configured to output the selection list of recommended themes.

Fig. 8 is a block diagram showing another apparatus for recommendation of an interfare theme according to an exemplary embodiment of the disclosure. In the embodiment, based on the embodiment of Fig. 7, the first obtaining module 701 may include a providing sub-module 801 and an obtaining sub-module 802.

The providing sub-module 801 is configured to provide one or more image input interfaces for a user to input an image via one of the image input interfaces, wherein each of the image input interfaces corresponds to an input mode.

The obtaining sub-module 802 is configured to obtain the image inputted by the user as the target image.

In some optional embodiments, the one or more image input interfaces may include a first image input interface corresponding to a first input mode, wherein the first input mode is a mode to input an image currently being taken.

In some optional embodiments, the one or more image input interfaces may include a second image input interface corresponding to a second input mode, wherein the second input mode is a mode to input an image selected from a local album.

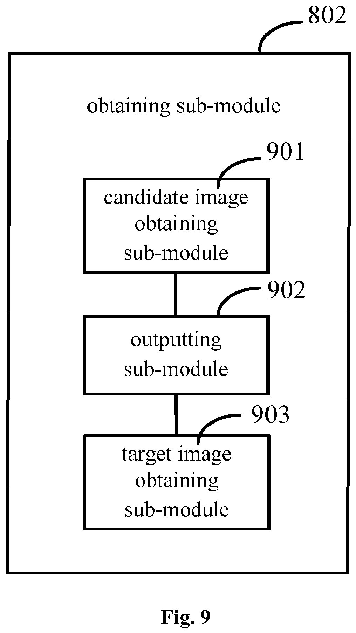

Fig. 9 is a block diagram showing another apparatus for recommendation of an interface theme according to an exemplary embodiment of the disclosure. In the embodiment, based on the embodiment of Fig. 8, the obtaining sub-module 802 may include a candidate image obtaining sub-module 901, an outputting sub-module 902 and a target image obtaining sub-module 903.

The candidate image obtaining sub-module 901 is configured to obtain, when the user selects the second image input interface to input an image, images each including a figure of a person as candidate images.

The outputting sub-module 902 is configured to output a selection interface for the candidate images.

The target image obtaining sub-module 903 is configured to obtain an image, which the user selects from the candidate images via the selection interface, as the target image.

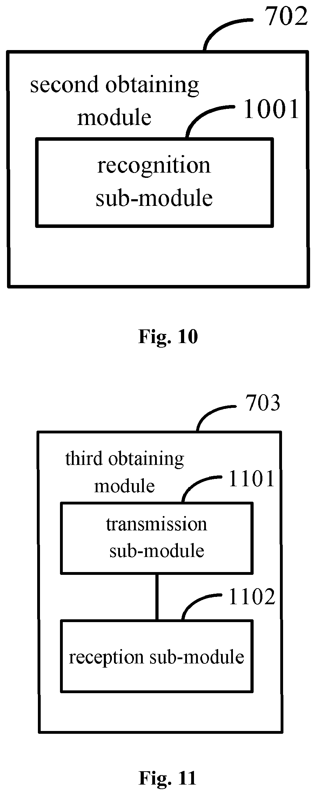

Fig. 10 is a block diagram showing another apparatus for recommendation of an interface theme according to an exemplary embodiment of the disclosure. In the embodiment, based on the embodiment of Fig. 7, the second obtaining module 702 may include a recognition sub-module 1001.

The recognition sub-module 1001 is configured to recognize and analyze the target image using a pre-trained model to extract the characteristic information of the target person from the target image.

In some optional embodiments, the characteristic information of the target person comprises one or more of age range information of the target person, gender information of the target person, clothing information of the target person, hair style information of the target person, and facial expression information of the target person.

Fig. 11 is a block diagram showing another apparatus for recommendation of an interface theme according to an exemplary embodiment of the disclosure. In the embodiment, based on the embodiment of Fig. 7, the third obtaining module 703 may include a transmission sub-module 1101 and a reception sub-module 1102.

The transmission sub-module 1101 is configured to transmit to a server a request for obtaining recommended themes which includes the characteristic information of the target person, to instruct the server to generate the selection list of recommended themes based on the characteristic information of the target person; and

The reception sub-module 1102 is configured to receive the selection list of recommended themes transmitted by the server.

It is to be understood that the apparatus may be preset in the terminal, or may be loaded into the terminal via downloading and the like. The corresponding modules of the apparatus may coordinate with the modules in the terminal, to implement the scheme for recommendation of an interface theme.

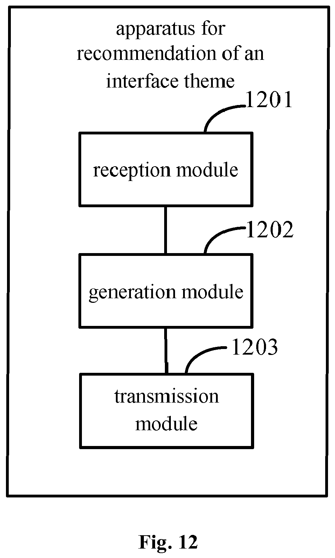

Fig. 12 is a block diagram showing another apparatus for recommendation of an interface theme according to an exemplary embodiment of the disclosure. The apparatus may include a reception module 1201, a generation module 1202, and a transmission module 1203.

The reception module 1201 is configured to receive a request for obtaining recommended themes transmitted by a terminal. The request for obtaining recommended themes includes characteristic information of a target person. The characteristic information of the target person is obtained based on a target image including a figure of the target person.

The generation module 1202 is configured to generate a selection list of recommended themes based on the characteristic information of the target person. The recommended themes are interface themes that match the characteristic information of the target person.

The transmission module 1203 is configured to transmit the selection list of recommended themes to the terminal.

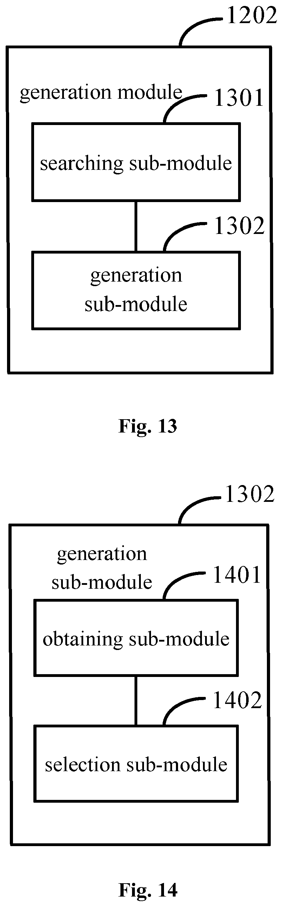

Fig. 13 is a block diagram showing another apparatus for recommendation of an interface theme according to an exemplary embodiment of the disclosure. In the embodiment, based on the embodiment of Fig. 12, the generation module 1202 may include a searching sub-module 1301 and a generation sub-module 1302.

The searching sub-module 1301 is configured to search pre-stored interface themes for a target theme, wherein the target theme has a preset label that matches the characteristic information of the target person; and

The generation sub-module 1302 is configured to generate the selection list of recommended themes based on the target theme.

Fig. 14 is a block diagram showing another apparatus for recommendation of an interface theme according to an exemplary embodiment of the disclosure. In the embodiment, based on the embodiment of Fig. 13, the generation sub-module 1302 may include an obtaining sub-module 1401 and a selection sub-module 1402.

The obtaining sub-module 1401 is configured to obtain download times corresponding to the target theme.

The selection sub-module 1402 is configured to select from the target themes a predetermined number of top ones in descending order of download times, as the recommended themes, to generate the selection list of recommended themes

In some optional embodiments, the characteristic information of the target person comprises one or more of age range information of the target person, gender information of the target person, clothing information of the target person, hair style information of the target person and facial expression information of the target person.

It is to be understood that the apparatus may be preset in the terminal, or may be loaded into the terminal via downloading and the like. The corresponding modules of the apparatus may coordinate with the modules in the terminal, to implement the scheme for recommendation of an interface theme.

For apparatus embodiments, method embodiments may be referred to for related content, since the apparatus embodiments substantially correspond to the method embodiments. The apparatus embodiments described above are only illustrative. The units described as separated components may or may not be separated physically. Also, the components shown as units may or may not be physical ones, i.e., they may be located in the same place or may be distributed in a plurality of network units. Partial or all modules may be selected to implement the schemes of the disclosure as required. Those skilled in the art may understand and implement the schemes without any inventive efforts.

Correspondingly, a terminal is provided in the disclosure. The terminal includes a processor and a memory to store processor-executable instructions. The processor is configured to: obtain a target image which includes a figure of a target person; obtain characteristic information of the target person based on the target image; obtain a selection list of recommended themes, wherein the recommended themes are interface themes that match the characteristic information of the target person; and output the selection list of recommended themes.

Correspondingly, a server is provided in the disclosure. The server includes a processor and a memory to store processor-executable instructions. The processor is configured to: receive a request for obtaining recommended themes transmitted by a terminal, wherein the request for obtaining recommended themes includes characteristic information of a target person, and wherein the characteristic information of the target person is obtained based on a target image including a figure of the target person; generate a selection list of recommended themes based on the characteristic information of the target person, wherein the recommended themes are interface themes that match the characteristic information of the target person; and transmit the selection list of recommended themes to the terminal.

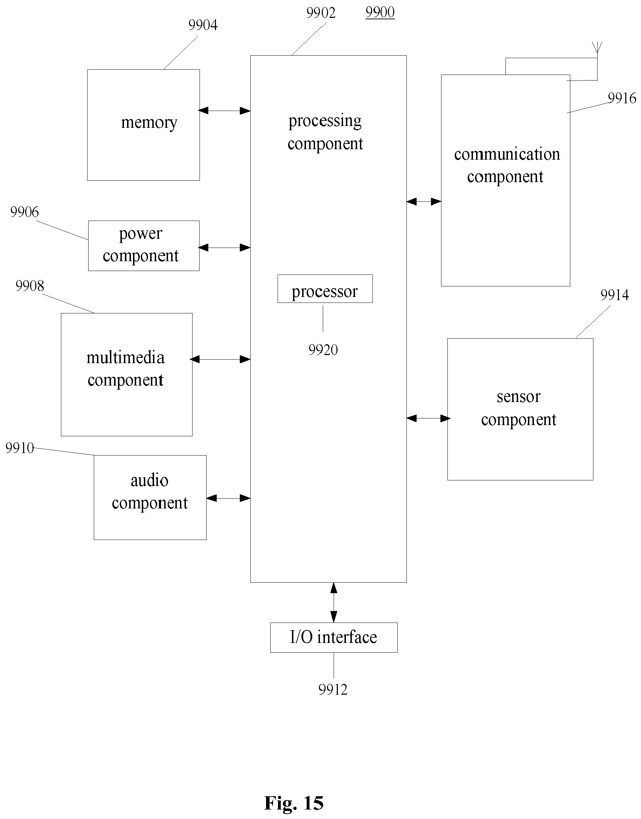

Fig. 15 is a structure diagram showing an apparatus 9900 for recommendation of an interface theme according to an exemplary embodiment of the disclosure. For example, the apparatus 9900 may be a mobile phone, a computer, a digital broadcast terminal, a messaging device, a gaming console, a tablet, a medical device, exercise equipment, a personal digital assistant, and the like.

Referring to Fig. 15, the apparatus 9900 may include one or more of the following components: a processing component 9902, a memory 9904, a power component 9906, a multimedia component 9908, an audio component 9910, an input/output (I/O) interface 9912, a sensor component 9914, and a communication component 9916.

The processing component 9902 typically controls overall operations of the apparatus 9900, such as the operations associated with display, telephone calls, data communications, camera operations, and recording operations. The processing component 9902 may include one or more processors 9920 to execute instructions to perform all or part of the steps in the above described methods. Moreover, the processing component 9902 may include one or more modules which facilitate the interaction between the processing component 9902 and other components. For instance, the processing component 9902 may include a multimedia module to facilitate the interaction between the multimedia component 9908 and the processing component 9902.

The memory 9904 is configured to store various types of data to support the operation of the apparatus 9900. Examples of such data include instructions for any applications or methods operated on the apparatus 9900, contact data, phonebook data, messages, pictures, video, etc. The memory 9904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 9906 provides power to various components of the apparatus 9900. The power component 9906 may include a power management system, one or more power sources, and any other components associated with the generation, management, and distribution of power for the apparatus 9900.

The multimedia component 9908 includes a screen providing an output interface between the apparatus 9900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 9908 includes a front camera and/or a rear camera. The front camera and the rear camera may receive an external multimedia datum while the apparatus 9900 is in an operation mode, such as a photographing mode or a video mode. Each of the front camera and the rear camera may be a fixed optical lens system or have optical focusing and zooming capability.

The audio component 9910 is configured to output and/or input audio signals. For example, the audio component 9910 includes a microphone ("MIC") configured to receive an external audio signal when the apparatus 9900 is in an operation mode, such as a call mode, a recording mode, and a voice recognition mode. The received audio signal may be further stored in the memory 9904 or transmitted via the communication component 9916. In some embodiments, the audio component 9910 further includes a speaker to output audio signals.

The I/O interface 9912 provides an interface between the processing component 9902 and peripheral interface modules, the peripheral interface modules being, for example, a keyboard, a click wheel, buttons, and the like. The buttons may include, but are not limited to, a home button, a volume button, a starting button, and a locking button.

The sensor component 9914 includes one or more sensors to provide status assessments of various aspects of the apparatus 9900. For instance, the sensor component 9914 may detect an open/closed status of the apparatus 9900, relative positioning of components (e.g., the display and the keypad, of the apparatus 9900), a change in position of the apparatus 9900 or a component of the apparatus 9900, a presence or absence of user contact with the apparatus 9900, an orientation or an acceleration/deceleration of the apparatus 9900, and a change in temperature of the apparatus 9900. The sensor component 9914 may include a proximity sensor configured to detect the presence of a nearby object without any physical contact. The sensor component 9914 may also include a light sensor, such as a CMOS or CCD image sensor, for use in imaging applications. In some embodiments, the sensor component 9914 may also include an accelerometer sensor, a gyroscope sensor, a magnetic sensor, a pressure sensor, or a temperature sensor.

The communication component 9916 is configured to facilitate communication, wired or wirelessly, between the apparatus 9900 and other devices. The apparatus 9900 can access a wireless network based on a communication standard, such as Wi-Fi, 2G, or 3G, or a combination thereof. In an exemplary embodiment, the communication component 9916 receives a broadcast signal or broadcast associated information from an external broadcast management system via a broadcast channel. In an exemplary embodiment, the communication component 9916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 9900 may be implemented in one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium including instructions, such as included in the memory 9904, executable by the processor 9920 in the apparatus 9900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including common sense or customary technical means in the art that is not disclosed in the disclosure. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention is only limited by the appended claims.

## Claims

1. A method for recommendation of an interface theme, **characterized by** comprising:
obtaining (201) a target image which includes a figure of a target person;
obtaining (202) characteristic information of the target person based on the target image;
obtaining (203) a selection list of recommended themes, wherein the recommended themes are interface themes that match the characteristic information of the target person; and
outputting (204) the selection list of recommended themes.

2. The method of claim 1, wherein the obtaining a target image comprises:
providing (301) one or more image input interfaces for a user to input an image via one of the image input interfaces, wherein each of the image input interfaces corresponds to an input mode; and
obtaining (302) the image inputted by the user as the target image.

3. The method of claim 2, wherein the one or more image input interfaces include a first image input interface corresponding to a first input mode, wherein the first input mode is a mode to input an image currently being taken.

4. The method of claim 2 or 3, wherein the one or more image input interfaces include a second image input interface corresponding to a second input mode, wherein the second input mode is a mode to input an image selected from a local album.

5. The method of claim 4, wherein the obtaining the image inputted by the user as the target image comprises:
obtaining, when the user selects the second image input interface to input an image, images each including a figure of a person as candidate images;
outputting a selection interface for the candidate images; and
obtaining an image, which the user selects from the candidate images via the selection interface, as the target image.

6. The method of any one of claims 1 to 5, wherein the obtaining characteristic information of the target person based on the target image comprises:
recognizing and analyzing (303) the target image using a pre-trained model to extract the characteristic information of the target person from the target image.

7. The method of any one of claims 1 to 6, wherein the characteristic information of the target person comprises one or more of:
age range information of the target person;
gender information of the target person;
clothing information of the target person;
hair style information of the target person; and
facial expression information of the target person.

8. The method of any one of claims 1 to 7, wherein the obtaining a selection list of recommended themes comprises:
transmitting (304) to a server a request for obtaining recommended themes which includes the characteristic information of the target person, to instruct the server to generate the selection list of recommended themes based on the characteristic information of the target person; and
receiving (305) the selection list of recommended themes transmitted by the server.

9. An apparatus for recommendation of an interface theme, **characterized by** comprising:
a first obtaining module (701) configured to obtain a target image which includes a figure of a target person;
a second obtaining module (702) configured to obtain characteristic information of the target person based on the target image;
a third obtaining module (703) configured to obtain a selection list of recommended themes, wherein the recommended themes are interface themes that match the characteristic information of the target person; and
an output module (704) configured to output the selection list of recommended themes.

10. The apparatus of claim 9, wherein the first obtaining module (701) comprises:
a providing sub-module (801) configured to provide one or more image input interfaces for a user to input an image via one of the image input interfaces, wherein each of the image input interfaces corresponds to an input mode; and
an obtaining sub-module (802) configured to obtain the image inputted by the user as the target image.

11. The apparatus of claim 10, wherein the one or more image input interfaces include a first image input interface corresponding to a first input mode, wherein the first input mode is a mode to input an image currently being taken.

12. The apparatus of claim 10 or 11, wherein the one or more image input interfaces include a second image input interface corresponding to a second input mode, wherein the second input mode is a mode to input an image selected from a local album.

13. The apparatus of claim 12, wherein the obtaining sub-module (802) comprises:
a candidate image obtaining sub-module (901) configured to obtain, when the user selects the second image input interface to input an image, images each including a figure of a person as candidate images;
an outputting sub-module (902) configured to output a selection interface for the candidate images; and
a target image obtaining sub-module (903) configured to obtain an image, which the user selects from the candidate images via the selection interface, as the target image.

14. The apparatus of any one of claims 9 to 13, wherein the second obtaining module (702) comprises:
a recognition sub-module (1001) configured to recognize and analyze the target image using a pre-trained model to extract the characteristic information of the target person from the target image.

15. The apparatus of any one of claims 9 to 14, wherein the third obtaining module (703) comprises:
a transmission sub-module (1101) configured to transmit to a server a request for obtaining recommended themes which includes the characteristic information of the target person, to instruct the server to generate the selection list of recommended themes based on the characteristic information of the target person; and
a reception sub-module (1102) configured to receive the selection list of recommended themes transmitted by the server.
